# EUROPÄISCHE PATENTSCHRIFT

(11) **EP 1 798 671 B1**
(45) Veröffentlichungstag und Bekanntmachung des Hinweises auf die Patenterteilung: **30.06.2010**
(21) Anmeldenummer: 06025597.3
(22) Anmeldetag: 11.12.2006
(51) Int. Cl.: G06K 19/077

(54) **Verfahren zum Herstellen eines kartenförmigen Datenträgers**
Method for fabricating a card shaped data carrier
Méthode de fabrication d'un support de données de la forme d'une carte

(30) Priorität: 15.12.2005 DE 102005059964
(43) Veröffentlichungstag der Anmeldung: 20.06.2007
(73) Patentinhaber: Giesecke & Devrient GmbH, 81677 München (DE)
(72) Erfinder: Schröder, Sönke, 81541 München (DE)
(74) Vertreter: Höhfeld, Jochen

(56) Entgegenhaltungen:
- WO-A-01/88845
- WO-A-03/027946
- DE-C1- 19 703 122
- FR-A- 2 794 264

## Beschreibung

Die Erfindung betrifft ein Verfahren zum Herstellen eines kartenförmigen Datenträgers. Weiterhin betrifft die Erfindung ein Halbzeug für einen kartenförmigen Datenträger sowie einen kartenförmigen Datenträger. Bei dem Datenträger handelt es sich insbesondere um eine Chipkarte im Format ID-000 der Norm ISO-7810, die im folgenden als Minichipkarte bezeichnet wird.

Minichipkarten werden insbesondere in Mobilfunkgeräten eingesetzt. Je nach Baugröße des Mobilfunkgeräts ist es aber auch möglich, herkömmliche Chipkarten im Format ID-1 der Norm ISO-7810 einzusetzen, die im folgenden als Standardchipkarten bezeichnet werden.

Da die Handhabung einer Standardchipkarte wesentlich einfacher ist als die Handhabung einer Minichipkarte, wird bei der Herstellung einer Minichipkarte üblicherweise so vorgegangen, dass die Minichipkarte als integraler Bestandteil einer Standardchipkarte hergestellt wird und erst unmittelbar vor der ersten Benutzung aus dem Kartenkörper der Standardchipkarte herausgetrennt wird. Aus diesem Grund wird die Minichipkarte auch als "Plug-In" bezeichnet. Im einzelnen wird zunächst die Standardchipkarte gemäß eines üblichen Fertigungsverfahrens hergestellt und längs der Konturen der Minichipkarte mit Stanzungen versehen, so dass die Minichipkarte lediglich über schmale Stege mit der Standardchipkarte verbunden bleibt. Danach wird der integrierte Schaltkreis getestet und initialisiert. Schließlich folgt noch die elektrische und optische Personalisierung der Minichipkarte.

Ein derartiges Herstellungsverfahren ist beispielsweise in der DE 40 07 221 A1 offenbart. Das dort beschriebene Verfahren weist die Besonderheit auf, dass mittels eines Prüfkopfes eine Positionierung der Standardchipkarte zum präzisen Ausstanzen der Kontur der Minichipkarte durchgeführt wird.

Aus der D1 (WO 01/88845 A1) ist eine Vorrichtung zum Stanzen von Kunststoffen bekannt, bei der ein Stanzstempel verwendet wird, der mit einem Gegenlager zusammenwirkt. Mit dieser Vorrichtung können insbesondere Freistanzungen durchgeführt werden, die sogenannte "Plug-Ins" aus einem größeren Kartenformat erzeugen.

Die D2 (DE 197 03122 C1) beschreibt ein Verfahren zur Herstellung von Datenträgern, die jeweils aus einer größeren Trägerkarte und einer in dieser eingebetteten Minichipkarte bestehen. Bei Karten werden mittels eines einzigen Verfahrensschrittes durch Spritzgießen hergestellt, wobei jeweils unterschiedliche Werkstoffe mit unterschiedlicher Erweichungstemperatur verwendet werden.

Ein Dongle zum Einsatz in einem Telekommunikationsgerät wird in der D3 (WO 03/027946 A1) offenbart. Der Dongle weist eine abgerundete Form auf, wobei diese wahlweise durch Stanzen, Tiefziehen oder Falzen erreicht werden kann.

Alternativ zur Herstellung der Minichipkarte durch Ausstanzen aus einer Chipkarte eines größeren Formats ist es auch möglich, die Minichipkarte mittels eines Spritzgussverfahrens unmittelbar in ihrem endgültigen Format herzustellen. Im Gegensatz zum Ausstanzen, bei dem im Stanzbereich scharfe 90°-Kanten erzeugt werden, können mit der Spritzgusstechnik Minichipkarten mit abgerundeten Kanten hergestellt werden. Abgerundete Kanten sind beispielsweise dann erforderlich, wenn die Minichipkarten als Multimediakarten eingesetzt werden sollen, da die dafür maßgebliche Spezifikation eine Verrundung der Kanten vorschreibt. Bei der Herstellung von Minichipkarten im Spritzgussverfahren sind allerdings die Möglichkeiten der Gestaltung der Kartenoberfläche begrenzt.

Der Erfindung liegt daher die Aufgabe zugrunde, kartenförmige Datenträger mit abgerundeten Kanten auf möglichst optimale Weise herzustellen.

Diese Aufgabe wird durch die Merkmalskombination des Anspruchs 1 gelöst.

Beim erfindungsgemäßen Verfahren zur Herstellung eines kartenförmigen Datenträgers mit einem integrierten Schaltkreis zum Speichern und/oder Verarbeiten von Daten wird ein Kartenkörper in einem größeren Format als dem Format des Datenträgers derart hergestellt, dass der Kartenkörper den Datenträger als einen integralen Bestandteil aufweist. Der Kartenkörper wird entlang einer vorgesehenen Außenkontur des Datenträgers bereichsweise durchtrennt und/oder wenigstens bereichsweise geschwächt. Das erfindungsgemäße Verfahren zeichnet sich dadurch aus, dass der Kartenkörper entlang der Außenkontur des Datenträgers wenigstens bereichsweise verformt wird und dadurch die Außenkontur des Datenträgers wenigstens bereichsweise als eine abgerundete Kante ausgebildet wird.

Das erfindungsgemäße Verfahren hat den Vorteil, dass damit kleinformatige Datenträger hoher Qualität hergestellt werden können, die abgerundete Kanten aufweisen. Besonders vorteilhaft ist dabei, dass zum Teil auf Verfahrensschritte zurückgegriffen werden kann, die bereits bei der Herstellung größerformatiger Datenträger zum Einsatz kommen. Dadurch wird es beispielsweise möglich, kleinformatige Datenträger herzustellen, die einen Designdruck aufweisen.

Bei einer vorteilhaften Verfahrensvariante wird der Kartenkörper im Bereich des Datenträgers so verformt, dass eine Vertiefung ausgebildet wird. Die Vertiefung kann beispielsweise als eine Griffnut dienen, welche die Handhabung des Datenträgers erleichtert.

Die Verformung des Kartenkörpers kann während des Durchtrennens und/ oder des Schwächens des Kartenkörpers durchgeführt werden. Dadurch können separate Arbeitsschritte für die Verformung entfallen, so dass eine effiziente Fertigung möglich ist.

Ebenso ist es auch möglich, dass die Verformung des Kartenkörpers nach dem Durchtrennen und/ oder dem Schwächens des Kartenkörpers durchgeführt wird.

Vorzugsweise wird die Verformung des Kartenkörpers mittels wenigstens einer Prägeoperation durchgeführt. Prägeoperationen können schnell und kostengünstig durchgeführt werden. Dabei ist es insbesondere auch möglich, dass die Verformung des Kartenkörpers unter Zufuhr von Wärme durchgeführt wird. Dies hat den Vorteil, dass die Verformung mit einem niedrigeren Kraftaufwand als im kalten Zustand durchgeführt werden kann.

Der Kartenkörper kann insbesondere durch Lamination hergestellt werden. Auf diese Weise ist sowohl eine hohe Qualität als auch ein anspruchsvolles äußeres Erscheinungsbild des Datenträgers erreichbar.

Die Erfindung bezieht sich weiterhin auf ein flachstückartiges Halbzeug, das einen kartenförmigen Datenträger mit einem integrierten Schaltkreis zum Speichern und/oder Verarbeiten von Daten als einen integralen Bestandteil aufweist und entlang einer Außenkontur des Datenträgers bereichsweise durchtrennt und/ oder wenigstens bereichsweise geschwächt ist. Das erfindungsgemäße Halbzeug zeichnet sich dadurch aus, dass die Außenkontur des Datenträgers wenigstens bereichsweise als eine abgerundete Kante ausgebildet ist.

Aus dem Halbzeug kann ein Benutzer ohne technische Hilfsmittel den Datenträger heraustrennen, der trotz des Heraustrennens nicht scharfkantig ausgebildet ist, sondern abgerundete Kanten aufweist.

Das Halbzeug ist vorzugsweise als eine Chipkarte mit standardisierten Abmessungen ausgebildet. Dabei kann die Chipkarte insbesondere das Format ID-1 gemäß der Norm ISO-7810 aufweisen. Für Chipkarten dieses Formats stehen ausgereifte Fertigungsverfahren zur Verfügung. Außerdem lassen sich Chipkarten dieses Formats sehr gut handhaben.

Schließlich bezieht sich die Erfindung auf einen laminierten kartenförmigen Datenträger mit einem integrierten Schaltkreis zum Speichern und/ oder Verarbeiten von Daten. Der erfindungsgemäße Datenträger weist eine Außenkontur auf, die wenigstens bereichsweise als eine abgerundete Kante ausgebildet ist.

Vorzugsweise ist je eine abgerundete Kante auf beiden Hauptflächen des Datenträgers ausgebildet. Die Kante kann insbesondere einen Kantenradius zwischen 0,05 mm und 0,2 mm aufweisen.

Der Datenträger kann in einem an die abgerundete Kante angrenzenden Bereich eine erhöhte Materialdichte aufweisen. Weiterhin kann wenigstens eine Hauptfläche des Datenträgers eine Vertiefung aufweisen. Vorzugsweise ist der Datenträger als eine Chipkarte mit standardisierten Abmessungen ausgebildet. Dabei weist die Chipkarte insbesondere das Format ID-000 gemäß der Norm ISO-7810 auf. In einem bevorzugten Ausführungsbeispiel ist der Datenträger als eine Multimediakarte ausgebildet.

Die Erfindung wird im folgenden anhand der in der Zeichnung dargestellten Ausführungsbeispiele näher erläutert.

Es zeigen
- Fig. 1: ein Ausführungsbeispiel einer erfindungsgemäßen Minichipkarte, die als ein Bestandteil einer Chipkarte eines größeren Formats ausgebildet ist, in Aufsicht,
- Fig. 2: die in Fig. 1 dargestellte Standardchipkarte inklusive der Minichipkarte in Schnittdarstellung,
- Fig. 3: die in Fig. 1 dargestellte Standardchipkarte inklusive der Minichipkarte in einer weiteren Schnittdarstellung,
- Fig. 4: die in Fig. 1 dargestellte Standardchipkarte inklusive der Minichipkarte in einer nochmals andersartigen Schnittdarstellung,
- Fig. 5: die Standardchipkarte inklusive der Minichipkarte nach der Stanzoperation in einer Fig. 4 entsprechenden Darstellung und
- Fig. 6: die Standardchipkarte inklusive der Minichipkarte nach der Kerboperation in einer Fig. 3 entsprechenden Darstellung.

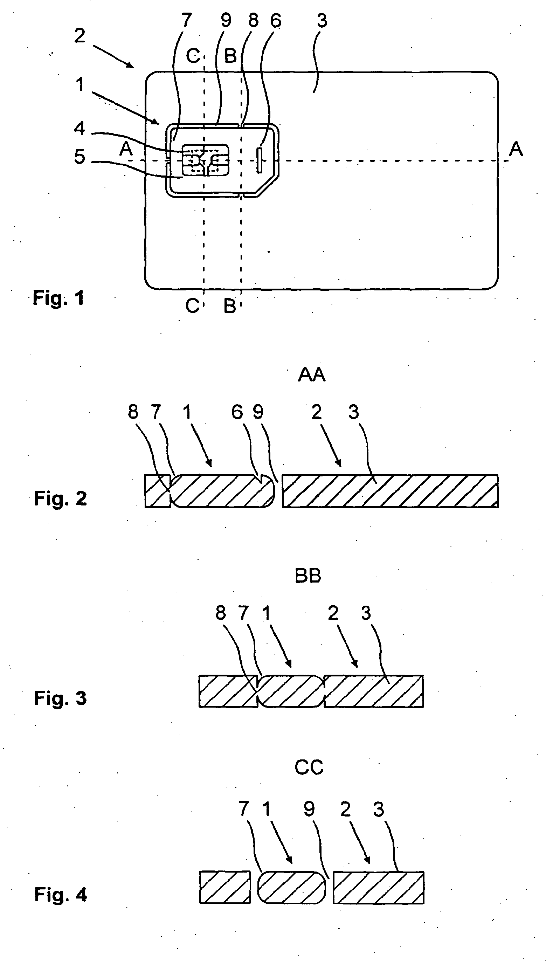

Fig. 1 zeigt ein Ausführungsbeispiel einer erfindungsgemäßen Minichipkarte 1, die als ein Bestandteil einer Chipkarte eines größeren Formats ausgebildet ist, in Aufsicht. Die großformatige Chipkarte wird im folgenden zu Unterscheidungszwecken als Standardchipkarte 2 bezeichnet und kann beispielsweise das Format ID-1 gemäß der Norm ISO 7810 aufweisen. Die Minichipkarte 1 kann beispielsweise das Format ID-000 derselben Norm aufweisen.

Die Standardchipkarte 2 weist einen Kartenkörper 3 auf, der die Minichipkarte 1 als einen integralen Bestandteil enthält. Die Minichipkarte 1 verfügt über einen integrierten Schaltkreis 4 und über eine Kontaktfläche 5 zur berührenden Kontaktierung des integrierten Schaltkreises 4. Außerdem ist auf der Oberfläche der Minichipkarte 1 eine Griffnut 6 ausgebildet, um die Handhabung der Minichipkarte 1 zu erleichtern. Die Minichipkarte 1 ist durch eine außen umlaufende Kante 7 in ihren lateralen Abmessungen begrenzt. Über mehrere schmale Stege 8 ist die Minichipkarte 1 mit dem Kartenkörper 3 der Standardchipkarte 2 verbunden. Außerhalb der Stege 8 ist die Minichipkarte 1 durch Freistanzungen 9 vom Kartenkörper 3 der Standardchipkarte 2 getrennt. Die Stege 8 sind so dimensioniert, dass die Minichipkarte 1 durch einen Benutzer ohne zusätzliche Hilfsmittel aus dem Kartenkörper 3 der Standardchipkarte 2 herausgetrennt werden kann. Alternativ zu den Stegen 8 kann die Minichipkarte 1 auch auf andere Weise so mit dem Kartenkörper 3 der Standardchipkarte 2 verbunden sein, dass ein Heraustrennen der Minichipkarte 1 ohne Hilfsmittel möglich ist. Beispielsweise besteht die Möglichkeit, das Kartenmaterial im Bereich der Außenkontur der Minichipkarte 1 in seinem Querschnitt zu schwächen. Die Schwächung des Querschnitts kann auch mit der Ausbildung von Stegen 8 kombiniert werden.

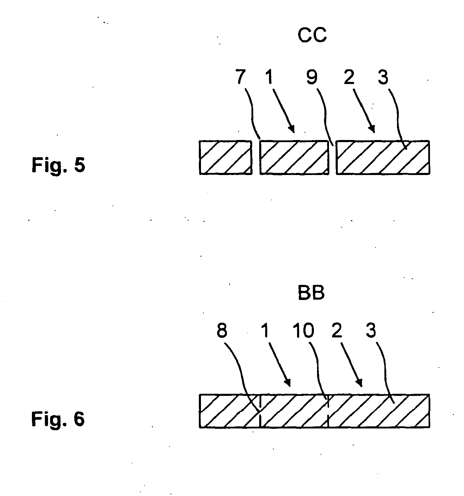

In Fig. 1 sind Schnittlinien AA, BB und CC eingezeichnet. Die zugehörigen Schnittdarstellungen sind in den Fig. 2, 3 und 4 abgebildet. Diese Schnittdarstellungen sind aus Gründen der Anschaulichkeit stark unmaßstäblich gezeichnet. Außerdem ist jeweils nur die Außenkontur der Schnittfläche dargestellt. Entsprechendes gilt auch für die Schnittdarstellungen der Fig. 5 und 6.

Fig. 2 zeigt die in Fig. 1 dargestellte Standardchipkarte 2 inklusive der Minichipkarte 1 in Schnittdarstellung. Der Schnitt ist entlang der in Fig. 1 eingezeichneten Schnittlinie AA geführt, die sich parallel zur Längsseite der Minichipkarte 1 erstreckt und mittig durch die Minichipkarte 1 verläuft. Somit wird sowohl einer der Stege 8 als auch eine der Freistanzungen 9 vom Schnitt erfasst. Beim dargestellten Ausführungsbeispiel weist der Kartenkörper 3 im Bereich des Stegs 8 eine reduzierte Dicke auf. Dabei ist die Schnittfläche im Bereich des Stegs 8 so profiliert, dass die Kante 7 abgerundet ist. Der Kantenradius weist vorzugsweise einen Wert zwischen ca. 0,05 mm und 0,2 mm, insbesondere einen Wert von ca. 0,1 mm, auf. Herstellungsbedingt kann im angrenzenden Bereich der Standardchipkarte 2 ebenfalls eine Verrundung ausgebildet sein. Die Verrundung im Bereich der Standardchipkarte 2 ist allerdings nicht erforderlich. Im Bereich der Freistanzungen 9 ist die Kante 7 der Minichipkarte 1 ebenfalls abgerundet, wobei der Kantenradius wiederum vorzugsweise Werte im genannten Intervall aufweist. Wie aus der Fig. 2 ersichtlich ist, sind die Kanten 7 beider Hauptflächen der Minichipkarte 1 abgerundet. Mit anderen Worten, die Minichipkarte 1 weist sowohl auf ihrer Vorderseite als auch auf ihrer Rückseite eine abgerundete Kante 7 auf.

Da die Minichipkarte 1 nur über die Stege 8 mit der Standardchipkarte 2 verbunden ist und außerdem die Dicke des Kartenkörpers 3 im Bereich der Stege 8 reduziert ist, kann die Minichipkarte 1 von einem Benutzer ohne technische Hilfsmittel aus der Standardchipkarte 2 herausgetrennt werden. Nach dem Heraustrennen weisen vorzugsweise beide Hauptflächen der Minichipkarte 1 jeweils eine umlaufende Kante 7 auf, die auf ihrer gesamten Länge abgerundet ist.

Fig. 3 zeigt die in Fig. 1 dargestellte Standardchipkarte 2 inklusive der Minichipkarte 1 in einer weiteren Schnittdarstellung. Dabei ist der Schnitt entlang der in Fig. 1 eingezeichneten Schnittlinie BB geführt, welche die Minichipkarte 1 im Bereich zweier Stege 8 quert. Analog zu Fig. 2 weist der Kartenkörper 3 auch im Bereich der in Fig. 3 dargestellten Stege 8 eine reduzierte Dicke auf, wobei wiederum die Außenkontur der Minichipkarte 1 durch eine abgerundete Kante 7 ausgebildet wird. Mit anderen Worten, die in Fig. 3 dargestellten Stege 8 sind analog zu dem in Fig. 2 dargestellten Steg 8 ausgebildet.

Fig. 4 zeigt die in Fig. 1 dargestellte Standardchipkarte 2 inklusive der Minichipkarte 1 in einer nochmals andersartigen Schnittdarstellung. Bei Fig. 4 ist der Schnitt entlang der in Fig. 1 eingezeichneten Schnittlinie CC geführt, welche die Minichipkarte 1 im Bereich zweier Freistanzungen 9 quert. Analog zu Fig. 2 ist die Kante 7 der Minichipkarte 1 im Bereich beider Freistanzungen 9 abgerundet.

Zur Herstellung der in den Fig. 1 bis 4 dargestellten Minichipkarte 1 kann folgendermaßen vorgegangen werden:

Zunächst wird die Standardchipkarte 2 gemäß einem für sich bekannten Verfahren, vorzugsweise durch Lamination mehrerer Kunststofffolien, hergestellt. Vorzugsweise wird wenigstens eine der Kunststofffolien vor der Lamination mit einem Aufdruck versehen. Im Rahmen des Herstellungsverfahrens wird der Kartenkörper 3 ausgebildet und mit dem integrierten Schaltkreis 4 und der Kontaktfläche 5 zur berührenden Kontaktierung des integrierten Schaltkreises 4 ausgestattet.

Danach wird eine Stanzoperation zur Ausbildung der Freistanzungen 9 durchgeführt, wobei jeweils der Bereich der Stege 8 ausgespart wird. Das Ergebnis der Stanzoperation ist in Fig. 5 dargestellt.

Fig. 5 zeigt die Standardchipkarte 2 inklusive der Minichipkarte 1 nach der Stanzoperation in einer Fig. 4 entsprechenden Darstellung. Im Gegensatz zu Fig. 4 sind die Kanten 7 der Minichipkarte 1 in Fig. 5 im Bereich der Freistanzungen 9 nicht abgerundet, sondern scharfkantig ausgebildet.

Nach der Stanzoperation werden die Stege 8 durch eine Kerboperation geschwächt. Dies ist in Fig. 6 dargestellt.

Fig. 6 zeigt die Standartchipkarte 2 inklusive der Minichipkarte 1 nach der Kerboperation in einer Fig. 3 entsprechenden Darstellung. Beim dargestellten Ausführungsbeispiel werden die Stege 8 ausgehend von beiden Hauptflächen mit je einer Kerbung 10 versehen. Die Kerbungen 10 werden auf beiden Hauptflächen deckungsgleich zueinander ausgebildet und erstrecken sich so tief in den Kartenkörper 3, dass ein nicht durchtrennter Kernbereich erhalten bleibt, der vorzugsweise eine Dicke von ca. 200 µm bis 300 µm, insbesondere eine Dicke von ca. 250 µm, aufweist.

Nach der Kerboperation werden die Kanten 7 der Minichipkarte 1 durch eine Prägeoperation verrundet. Hierzu wird ein Prägestempel gegen den Kartenkörper 3 gepresst und dadurch das Kartenmaterial so verformt, dass die Kanten 7 jeweils abgerundet werde. Dabei kann die Prägeoperation gleichzeitig auf beiden Hauptflächen der Minichipkarte 1 durchgeführt werden. Die Prägeoperation kann entweder im kalten Zustand durchgeführt oder durch Wärmezufuhr unterstützt werden. Durch die Prägeoperation kann Material des Kartenkörpers 3 in einen an die Kante 7 angrenzenden Bereich verdrängt werden. Außerdem kann es innerhalb dieses Bereichs zu einer Materialverdichtung kommen. Mit derselben oder mit einer zusätzlichen Prägeoperation kann auch die Griffnut 6 der Minichipkarte 1 ausgebildet werden und es können bei Bedarf weitere Prägungen vorgenommen werden. Als Ergebnis der Prägeoperation ergibt sich die in den Fig. 1 bis 4 dargestellte Standardchipkarte 2 mit integrierter Minichipkarte 1.

Von der beschriebenen Vorgehensweise kann insbesondere hinsichtlich der Reihenfolge der Bearbeitungsschritte und dadurch abgewichen werden, dass mehrerer Bearbeitungsschritte zu einem einzigen Bearbeitungsschritt zusammengefasst werden. Beispielsweise kann die Prägeoperation auch vor der Stanz- und der Kerboperation durchgeführt werden. Besonders vorteilhaft ist es, wenn die Prägeoperation gemeinsam mit der Stanzoperation durchgeführt wird.

## Patentansprüche

1. Verfahren zur Herstellung eines kartenförmigen Datenträgers (1) mit einem integrierten Schaltkreis (4) zum Speichern und/oder Verarbeiten von Daten, wobei ein Kartenkörper (3) in einem größeren Format als dem Format des Datenträgers (1) derart hergestellt wird, dass der Kartenkörper (3) den Datenträger (1) als einen integralen Bestandteil aufweist und wobei der Kartenkörper (3) entlang einer vorgesehenen Außenkontur des Datenträgers (1) bereichsweise durchtrennt und/ oder wenigstens bereichsweise geschwächt wird, wobei der Datenträger durch eine außen umlaufende Kante in seinen lateralen Abmessungen begrenzt ist, **dadurch gekennzeichnet, dass** der Kartenkörper (3) entlang der Außenkontur des Datenträgers (1) wenigstens bereichsweise verformt wird und **dadurch** die umlaufende Kante des Datenträgers (1) wenigstens bereichsweise als eine abgerundete Kante (7) ausgebildet wird und dass die Verformung des Kartenkörpers (3) mittels wenigstens einer Prägeoperation durchgeführt wird.

2. Verfahren nach Anspruch 1, **dadurch gekennzeichnet, dass** der Kartenkörper (3) im Bereich des Datenträgers (1) so verformt wird, dass eine Vertiefung (6) ausgebildet wird.

3. Verfahren nach einem der vorhergehenden Ansprüche, **dadurch gekennzeichnet, dass** die Verformung des Kartenkörpers (3) während des Durchtrennens und/ oder des Schwächens des Kartenkörpers (3) durchgeführt wird.

4. Verfahren nach einem der Ansprüche 1 oder 2, **dadurch gekennzeichnet, dass** die Verformung des Kartenkörpers (3) nach dem Durchtrennen und/oder dem Schwächen des Kartenkörpers (3) durchgeführt wird.

5. Verfahren nach einem der vorhergehenden Ansprüche, **dadurch gekennzeichnet, dass** die Verformung des Kartenkörpers (3) unter Zufuhr von Wärme durchgeführt wird.

6. Verfahren nach einem der vorhergehenden Ansprüche, **dadurch gekennzeichnet, dass** der Kartenkörper (3) durch Lamination hergestellt wird.

## Claims

1. A method for producing a card-shaped data carrier (1) having an integrated circuit (4) for storing and/or processing data, wherein a card body (3) is produced in a larger format than the format of the data carrier (1) such that the card body (3) has the data carrier (1) as an integral component, and wherein the card body (3) is cut through in certain areas, and/or weakened at least in certain areas, along an intended outside contour of the data carrier (1), wherein the data carrier is limited in its lateral dimensions by an outward circumferential edge, **characterized in that** the card body (3) is deformed at least in certain areas along the outside contour of the data carrier (1), thereby configuring the circumferential edge of the data carrier (1) at least in certain areas as a rounded edge (7), and the deformation of the card body (3) is carried out by means of at least one embossing operation.

2. The method according to claim 1, **characterized in that** the card body (3) is so deformed in the area of the data carrier (1) that a depression (6) is formed.

3. The method according to either of the preceding claims, **characterized in that** the deformation of the card body (3) is carried out during the cutting through and/or weakening of the card body (3).

4. The method according to either of claims 1 and 2, **characterized in that** the deformation of the card body (3) is carried out after the cutting through and/or weakening of the card body (3).

5. The method according to any of the preceding claims, **characterized in that** the deformation of the card body (3) is carried out while supplying heat.

6. The method according to any of the preceding claims, **characterized in that** the card body (3) is produced by lamination.

## Revendications

1. Procédé de fabrication d'un support de données (1) en forme de carte comportant un circuit intégré (4) pour la mémorisation et/ou le traitement de données, un corps de carte (3) étant fabriqué dans un format plus élevé que le format du support de données (1) de telle manière que le corps de carte (3) comporte le support de données (1) en tant qu'une partie intégrante, et le corps de carte (3) étant, le long d'un contour extérieur prévu du support de données (1), sectionné dans certaines zones et/ou amenuisé au moins dans certaines zones, les dimensions latérales du support de données étant limitées par une arête décrivant le pourtour extérieur du support de données, **caractérisé en ce que** le corps de carte (3) est déformé au moins dans certaines zones le long du contour extérieur du support de données (1), ce par quoi l'arête décrivant le pourtour du support de données (1) est réalisée au moins dans certaines zones sous forme d'une arête arrondie (7), et **en ce que** la déformation du corps de carte (3) est réalisée au moyen d'au moins une opération de gaufrage.

2. Procédé selon la revendication 1, **caractérisé en ce que** le corps de carte (3) est déformé de telle façon dans la zone du support de données (1) qu'un renfoncement (6) est réalisé.

3. Procédé selon une des revendications précédentes, **caractérisé en ce que** la déformation du corps de carte (3) est réalisée durant le sectionnement et/ou l'amenuisement du corps de carte (3).

4. Procédé selon une des revendications 1 ou 2, **caractérisé en ce que** la déformation du corps de carte (3) est réalisée après le sectionnement et/ou l'amenuisement du corps de carte (3).

5. Procédé selon une des revendications précédentes, **caractérisé en ce que** la déformation du corps de carte (3) est réalisée sous apport de chaleur.

6. Procédé selon une des revendications précédentes, **caractérisé en ce que** le corps de carte (3) est fabriqué par lamination.
